# EUROPEAN PATENT SPECIFICATION

(11) **EP 2 862 450 B1**
(45) Date of publication and mention of the grant of the patent: **01.03.2017**
(21) Application number: 14187975.9
(22) Date of filing: 07.10.2014
(51) Int. Cl.: A23G 9/08, A23G 9/12, A23G 9/22, A23G 9/28

(54) **Machine with integrated display for the production and dispensing of ice cream or the like**
Maschine mit integrierter Anzeige zur Herstellung und Ausgabe von Speiseeis oder dergleichen
Machine avec dispositif d'affichage intégré pour la production et la distribution de crème glacée ou analogue

(30) Priority: 17.10.2013 IT MI20131724
(43) Date of publication of application: 22.04.2015
(73) Proprietor: UGOLINI S.P.A., 20090 Opera (MI) (IT)
(72) Inventor: Ugolini, Marco Corrado, 20136 Milano (IT)
(74) Representative: Lampis, Marco

(56) References cited:
- EP-A1- 0 799 575
- WO-A1-2012/122594
- US-A- 5 159 818
- US-A1- 2012 312 049
- US-B1- 6 637 214
- Anonymous: "MiniGel Instruction Manual", Ugolini spa , 3 September 2013 (2013-09-03), XP002725668, Retrieved from the Internet: URL:http://web.archive.org/web/20130903084 645/http://www.ugolinispa.com/download/Lea flets_MiniGel_5pag.pdf [retrieved on 2014-06-06]

## Description

The present invention relates to a machine for the production and dispensing of ice cream or a similar product, of the type comprising a cooled internal tub equipped with a motor-driven mixer for preparation and conservation of the product. The machine also comprises a tap which is situated at the front and can be operated manually by the operator so as to dispense the product through a suitable dispensing outlet.

An ice cream machine (MiniGel) produced by Ugolini S.p.A. is described in its instruction manual. US5159818 discloses a machine for producing and dispensing ice cream. US6637214 discloses a machine for making and dispensing frozen custard and similar products. US2012/312049 discloses a monitoring and control system for dispensed chilled product devices.

In this type of machine, the user places the ingredients inside the machine and an automatic cycle for preparation of the product is started. Once the product is ready, the dispensing of successive measured amounts of product into a suitable container positioned underneath the dispensing outlet may be performed.

One problem of these machines is that the operator is unable to see the inside of the preparation tub in order to check whether the preparation and/or conservation step is proceeding correctly or whether there are problems. In the known machines a number of luminous signals are used, but these cannot be readily understood, in particular in the case of a user with little experience. When not sure, the operator generally opens the tub at the top in order to check the product visually, but this is not always possible and/or does not always provide all the information needed.

The general object of the present invention is to provide a machine which is of the aforementioned generic type, but which is able to provide clearer information as regards the product preparation and/or conservation cycle and allows easy use also by a non-expert person.

In view of this object the idea which has occurred is to provide, according to the invention, a machine, according to claim 1, for the production and dispensing of food products such as ice cream and the like

Still according to the objects of the invention the idea which has occurred is to devise a method, according to claim 10, for providing a user with information about the internal operation of a machine for the production and dispensing of food products such as ice cream and the like,

In order to illustrate more clearly the innovative principles of the present invention and its advantages compared to the prior art, an example of embodiment applying these principles will be described below with the aid of the accompanying drawings. In the drawings:
- Figure 1 shows a diagrammatic perspective view of a machine designed in accordance with the principles of the present invention;
- Figure 2 shows a diagrammatic view of a display showing information in the machine according to Figure 1;
- Figure 3 shows a sequence of images displayed on the display according to Figure 2 during preparation of the product inside the machine;
- Figures 4 and 5 show the images displayed on the display according to Figure 2 during conservation of the product and washing of the machine;
- Figure 6 shows a sequence of images/information displayed on the display according to Figure 2 during programming of machine parameters;
- Figure 7 shows a sequence of images/information displayed on the display according to Figure 2 during a possible alarm condition.

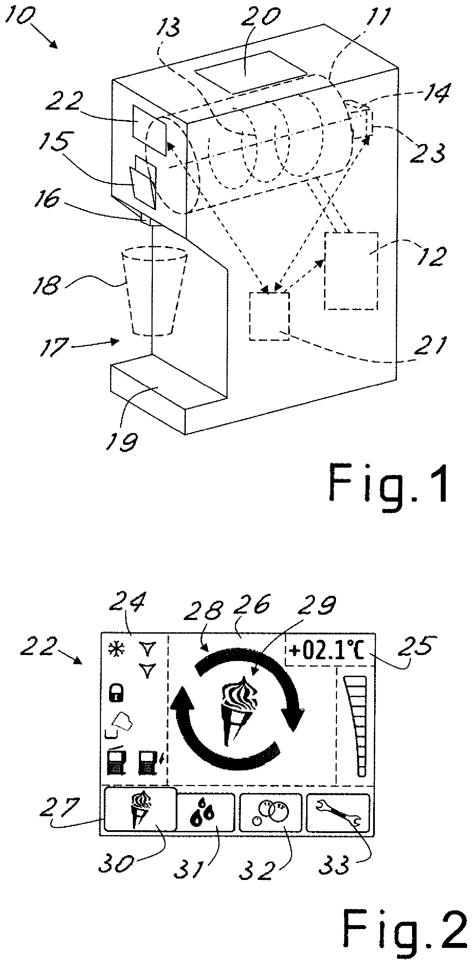

With reference to the figures, Figure 1 shows a machine, denoted generally by 10, for the production and dispensing of food products such as ice cream and the like. The machine comprises internally a tub 11 cooled by means of a known refrigerating circuit 12 and a helical mixer 13 which rotates substantially coaxial with the tub by means of an electric gearmotor 14. Generally the contents of the tub are not visible during normal operation of the machine.

The machine also has at the front a tap 15 connected to the tub for dispensing the product through a dispensing outlet 16. The tap may be advantageously of the type with a control lever to be lowered or pressed in order to perform dispensing.

According to a technique substantially known per se, the mixer 13 may be formed and arranged so that its rotation produces both an effect of mixing the product, which is pushed so as to circulate inside the tub, and a thrust which, when the tap is opened, causes dispensing of the product from the outlet 16 despite the fact that the product generally has a relatively paste-like consistency.

The dispensing outlet 16 is arranged above a front zone 17 of the machine which is intended to be a zone for receiving a container 18 (for example an ice cream cone or wafer, a cup or similar container open at the top) which is placed by the operator underneath the dispensing outlet in order to receive a measured amount of product. Underneath the receiving zone 17 the machine may advantageously comprise a shelf 19 for placing the container if necessary and for collecting dispersed droplets of product.

A hatch 20 allows access to the tub in order to place the ingredients inside it.

The machine comprises a control system 21 (for example a per se known suitably programmed microprocessor system) which manages operation of the machine and which is connected to a user interface panel 22. The user interface panel 22 comprises both display means and input means for user commands. Preferably, the panel may be a per se known touch screen such as to incorporate in a single element both the display functions and the input functions.

Advantageously, the display may be of the LCD colour graphics type for showing icons and animated symbols, retrieving them from a graphics memory of the control system. Alternatively or in addition, icons may be provided in the structure of the display and be switched on or switched off by the control system as needed.

Upon receiving a command from the control system 21, the display of the panel shows the user operating information about the machine.

In particular, the control system 21 receives signals from a sensor 23 for detecting rotation of the mixer 13 and displays an animated image which represents this rotation. The sensor 23 may be incorporated in the said gearmotor and may be of any type known per se. For example, it has been found to be advantageous if the sensor 23 is a rotational sensor such as an encoder or the like which is used by the control system for the electronic feedback control of the speed of rotation of the electric motor 14.

Figure 2 shows a possible appearance of the display 22 and the information shown on it by the control system 21.

The interface display or panel may advantageously comprise, together or alternately, a zone 24 for state icons, a zone for displaying alphanumeric information 25 and a central zone 26 for displaying the animated image. In the case of a panel with touch screen functions a further zone 27 for displaying operating commands of the machine which may be selected by means of the touch screen is provided. Alternatively, mechanical pushbuttons may be provided underneath the icons in the zone 27.

The state icons may for example comprise icons for signalling operation of the refrigerating circuit, opening of the hatch for accessing the tub or tap, need for filling, etc.

The alphanumeric information may be for example the temperature present or set for the tub contents. Bar-type symbols may also be used, as shown on the right-hand side of Figure 2.

As will become clear below, the operating functions which can be selected may advantageously envisage starting of the cycle for preparing and maintaining the product, the cycle for conservation of the product, a cycle for internal washing of the machine, and the programming of operating parameters.

Whatever the constructional design of the panel, a first displayed element comprises the animated image which indicates that the mixer is rotating. Advantageously, this image may comprise arrows 28 rotating in a circular manner.

When the rotation stops (or the speed of rotation falls below a minimum predetermined threshold), the image may become static or start flashing and/or have a colour which stands out on the display (for example red) or may also disappear.

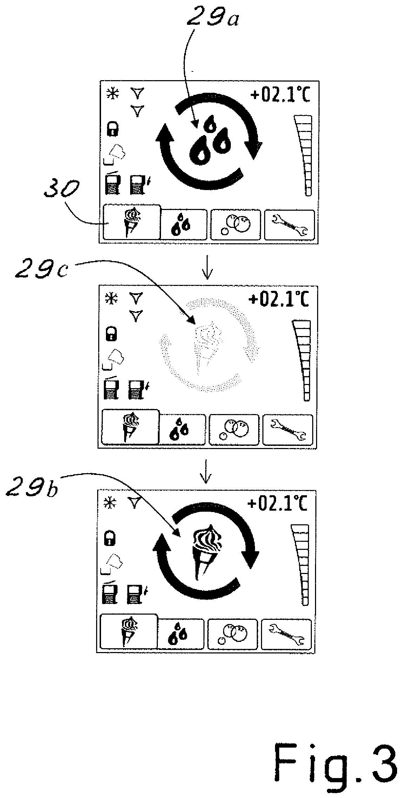

Advantageously, a second image 29 which indicates certain operating states of the machine may be shown inside the animated image. These operating states may be different and, preferably, may be chosen at least from a product preparation state and a product ready state, each with its own second image. For example, as shown by way of illustration in Figure 3, the product preparation state may be indicated by a second image consisting of droplets 29a for representing the still liquid or semi-liquid state of the product. The product ready state may instead be indicated by a second image 29b representing an ice cream cone.

Advantageously intermediate states of the preparation stage may also be envisaged, these providing, for example, an indication that product ready state is being approached. In particular, the preparation stage may comprise an initial preparation state and/or intermediate state and product nearly ready state, each with is own second image. As can be seen again in Figure 3, the initial preparation state and/or intermediate state and the product nearly ready state may be differentiated by different second images and/or by means of different colours of the respective second image. In particular, the initial preparation state may consist of the image of droplets 29a, while the product nearly ready state may consist of an image 29c which is similar to the product ready image 29b, but has a different colour. For example, the image 29a may be red (product not ready), the image 29c may be yellow (product nearly ready) or the image 29b may be green (product ready for dispensing).

Owing to the different ways of indicating the preparation states, once the ingredients have been introduced into the tub, a pushbutton for starting production (represented for example by an ice cream cone icon 30 in the zone 27 of the operating commands) may be pressed and the control system starts the preparation cycle, with changing of the preparation state image (as shown in the sequence of Figure 3) from 29a to 29b including (if necessary) the intermediate step indicated by the image 29c. Switching between the states may be calculated by the control system on the basis of preset preparation times and/or, advantageously, on the basis of the signals indicating rotation of the sensor 23 and/or signals indicating an increase in the resistance to rotation (which may again be detected by means of the sensor 23 or some other system for detecting the resistance torque, such as the sensor for the power consumption of the motor 14).

If the rotation stops for any reason, stopping or disappearance of the image 28 alerts the user immediately. Since this interruption of rotation may be associated with a malfunction condition, in the case of unexpected stoppage a corresponding acoustic signal may also be triggered, this being again controlled by means of the control system.

One of the operating states of the machine may also be the product conservation state, namely a state where the product dispensing activity is suspended and the machine maintains only a conservation temperature (generally higher than the dispensing temperature, but sufficient to prevent rapid deterioration of the product). The two temperatures will depend also on the nature of the product. The conservation temperature may be for example in the region of 4°C while the dispensing temperature may be in the region of 2°C or less.

An icon 31 in the interface zone 27 may be associated with the pushbutton for starting the conservation state. This icon may consist for example of droplets.

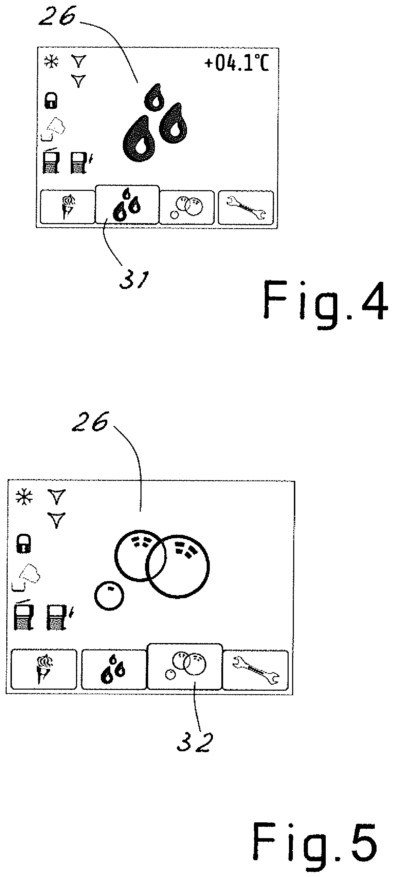

During the conservation state, the image representing the normal operating state (for example the rotating arrows with the ice cream cone in the centre) may be replaced in the central zone 26 of the display by an image representing the conservation cycle (for example droplets), as shown in Figure 4.

Another operating state of the machine may be that associated with internal washing of the machine. After emptying the product from the machine, suitable detergent and/or sanitizing products may be introduced into the tub and the washing step started. An icon 32 in the interface zone 27 may be associated with the pushbutton for starting the washing step. This icon may consist for example of bubbles.

During washing, the image in the central zone 26 of the display may indicate the washing cycle (for example bubbles), as shown in Figure 5. The machine may also envisage the possibility of manually entering operating parameters by assuming a setting operating state.

An icon 33 in the interface zone 27 may be associated with the pushbutton for starting the setting step. This icon may consist for example of a spanner.

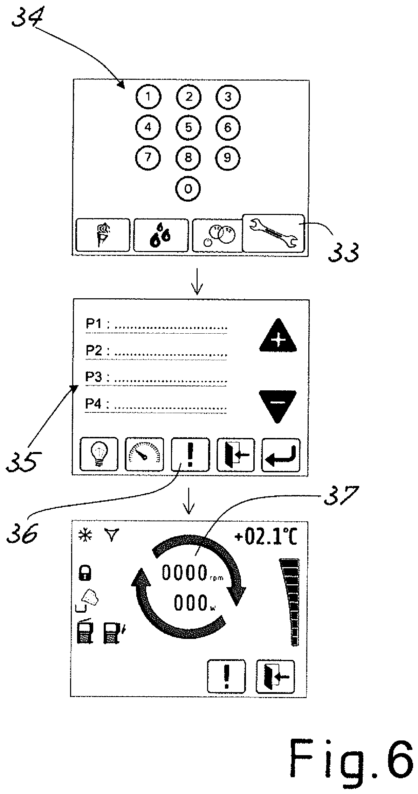

Preferably, when the setting step is activated a password may be requested in order to prevent unauthorized personnel from being able to vary operating parameters of the machine. Figure 6 shows a possible setting sequence, at the start of which a keypad 34 is displayed for entry of the password by means of the touch screen.

It is thus possible to enter the next screen which will show for example operating parameters and programs 35 which can be selected and/or modified. In the zone 27 displaying the machine operating commands, the icons 30-33 are replaced by new icons for selecting the functions of setting, saving or return to normal operation.

One of these new icons (indicated by 36 in Figure 6) may for example call up an information screen for operating parameters of the machine, as shown in the bottom screen of the sequence in Figure 6. This screen may also indicate for example the rotation of the mixer (by means of the image chosen to represent rotation thereof, for example rotating arrows) with, in the centre as an image for the state, numerical information 37 indicating the speed of rotation, the consumption of the machine motor, etc. In the zone 27 displaying the machine operating commands other icons for selection and return to the previous screen may be shown.

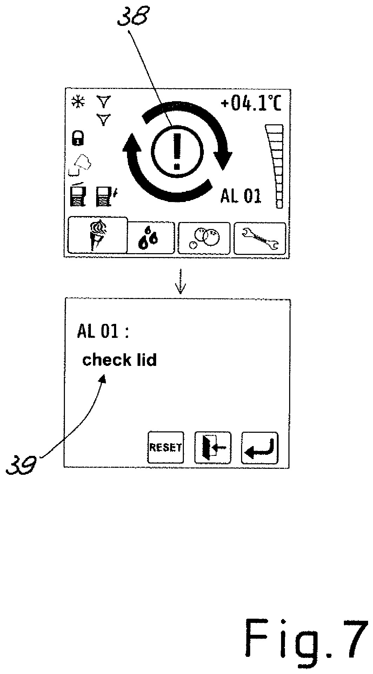

In addition to the screens described above, the machine may also comprise an alarm screen which is displayed in the case where the control system detects any anomalous condition. For example, a possible alarm screen is shown at the top of Figure 7. In this screen an alarm icon 38 (for example an exclamation mark) is shown in the central zone 26 of the display. An acoustic signal may also be associated with this screen. This initial alarm screen may be replaced (manually by means of a user command or cyclically on a time basis) by a screen explaining the alarm, as shown for example in the bottom drawing of Figure 7, where a possible text message 39 explaining the alarm is shown. In the zone 27 other selection icons may be shown, for example an icon for resetting the alarm (where possible) and an icon for return to the previous screen or to normal operation (if possible) At this point it is clear how the predefined objects have been achieved. Owing to the characteristic features described, the machine according to the invention may be easily used and the user is alerted immediately as to correct or faulty operation of the mixer and the various functions of the machine. The method for providing visual information to a user relating to the internal operation of the machine allows easy and immediate use of the machine also by non-expert persons.

Obviously the description above of an embodiment applying the innovative principles of the present invention is provided by way of example of these innovative principles and must therefore not be regarded as limiting the scope of the rights claimed herein.

For example detection of the rotation may be subject to a threshold value, namely the moving image may provide the rotation signal when the rotation is greater than a predefined value. This prevents for example the display indicating correct rotation when instead the mixer is rotating at too low a speed or in a weak or discontinuous manner owing to problems such as an excessive density of the product.

Rotation of the image may also be performed in a manner proportional to or depending on the actual speed of the mixer.

Other different screens may also be provided depending on the specific requirements and preferences.

## Claims

1. Machine (10) for the production and dispensing of food products, such as ice cream and the like, comprising a tank (11) cooled by a refrigerating circuit (12) and a motor-driven helical mixer (13) which rotates inside the tank, the tank also being provided at the front with a tap (15) for dispensing the product through a dispensing outlet (16), **characterized in that** it comprises a control system (21), a sensor (23) for detecting rotation of the mixer and an interface panel (22) which are connected to the control system (21) and the interface panel (22) comprising display means displaying an animated image (28) representing a rotation of the mixer (13) detected by the sensor (23).

2. Machine according to Claim 1, **characterized in that** the animated image (28) consists of arrows rotating in a circular manner.

3. Machine according to Claim 1, **characterized in that** the display means display a second image (29), inside the animated image (28), representing operating states of the machine.

4. Machine according to Claim 3, **characterized in that** the operating states shown correspond to at least from a product preparation state or product ready state, each with its own second image.

5. Machine according to Claim 4, **characterized in that** the preparation state comprises in turn an initial preparation state and/or an intermediate preparation state and a product nearly ready state, each with its own second image.

6. Machine according to Claim 5, **characterized in that** the initial preparation state and/or the intermediate preparation state and the product nearly ready state are differentiated also by means of different colours of the said second image.

7. Machine according to Claim 1, **characterized in that** the display means in the interface panel (22) comprise, together or alternatively, a zone (24) for displaying state icons, a zone (25) for displaying alphanumerical information, and a central zone (26) for displaying said animated image.

8. Machine according to Claim 1, **characterized in that** the interface panel (22) comprises a touch screen.

9. Machine according to Claim 8, **characterized in that** the interface panel (22) further comprises a zone for displaying operating commands of the machine which can be selected by means of the touch screen.

10. Method for providing a user with information about the internal operations of a machine for the production and dispensing of food products such as ice cream and the like, comprising a tank (11) cooled by a refrigerating circuit (12) and a motor-driven helical mixer (13) which rotates inside the tank, the tank also being provided at the front with a tap (15) for dispensing the product through a dispensing outlet (16), an electronic control system (21), a sensor (23) for detecting rotation of the mixer, and an interface panel (22), which are connected to the control system (21), the interface panel (22) comprising display means, the method comprising the supplying of information of the rotation of the mixer sensed by the sensor (23) to the electronic control system (21) and, when rotation of the mixer (13) is detected by means of the sensor (23), displaying on the display means an animated image (28) representing said rotation of the mixer.

## Patentansprüche

1. Maschine (10) zur Herstellung und Ausgabe von Nahrungsmitteln wie Eiscreme und dergleichen, die einen von einem Kühlkreislauf (12) gekühlten Behälter (11) und einen motorbetriebenen Schneckenmischer (13) aufweist, der innerhalb des Behälters dreht, wobei der Behälter auch an der Stirnseite mit einem Zapfhahn (15) zur Ausgabe des Produkts durch einen Ausgabeauslass (16) versehen ist, **dadurch gekennzeichnet, dass** sie ein Steuersystem (21), einen Sensor (23) zur Erfassung des Drehens des Mischers und eine Schnittstellenplatte (22) aufweist, die mit dem Steuersystem (21) verbunden sind, und die Schnittstellenplatte (22) Anzeigeeinrichtungen aufweist, die ein bewegtes Bild (28) anzeigen, das eine vom Sensor (23) erfasste Drehung des Mischers (13) anzeigt.

2. Maschine nach Anspruch 1, **dadurch gekennzeichnet, dass** das bewegte Bild (28) aus Pfeilen besteht, die kreisförmig drehen.

3. Maschine nach Anspruch 1, **dadurch gekennzeichnet, dass** die Anzeigeeinrichtungen ein zweites Bild (29) innerhalb des bewegten Bilds (28) anzeigen, das Betriebszustände der Maschine darstellt.

4. Maschine nach Anspruch 3, **dadurch gekennzeichnet, dass** die gezeigten Betriebszustände mindestens einem von einem Zustand der Produktzubereitung oder einem Zustand des fertigen Produkts entsprechen, jeder mit seinem eigenen zweiten Bild.

5. Maschine nach Anspruch 4, **dadurch gekennzeichnet, dass** der Zubereitungszustand abwechselnd einen Anfangszubereitungszustand und/oder einen Zwischenzubereitungszustand und einen Zustand des fast fertigen Produkts aufweist, jeder mit seinem eigenen zweiten Bild.

6. Maschine nach Anspruch 5, **dadurch gekennzeichnet, dass** der Anfangszubereitungszustand und/oder der Zwischenzubereitungszustand und der Zustand des fast fertigen Produkts sich auch durch verschiedene Farben des zweiten Bilds unterscheiden.

7. Maschine nach Anspruch 1, **dadurch gekennzeichnet, dass** die Anzeigeeinrichtungen in der Schnittstellenplatte (22) zusammen oder alternativ einen Bereich (24) zur Anzeige von Zustands-Ikons, einen Bereich (25) zur Anzeige einer alphanumerischen Information und einen zentralen Bereich (26) zur Anzeige des bewegten Bilds aufweisen.

8. Maschine nach Anspruch 1, **dadurch gekennzeichnet, dass** die Schnittstellenplatte (22) einen Berührungsbildschirm aufweist.

9. Maschine nach Anspruch 8, **dadurch gekennzeichnet, dass** die Schnittstellenplatte (22) weiter einen Bereich zur Anzeige von Bedienungsbefehlen der Maschine aufweist, die mittels des Berührungsbildschirms ausgewählt werden können.

10. Verfahren zur Belieferung eines Benutzers mit einer Information über die inneren Vorgänge einer Maschine zur Herstellung und Ausgabe von Nahrungsmitteln wie Eiscreme und dergleichen, die einen von einem Kühlkreislauf (12) gekühlten Behälter (11) und einen motorbetriebenen Schneckenmischer (13), der innerhalb des Behälters dreht, wobei der Behälter auch an der Stirnseite mit einem Zapfhahn (15) zur Ausgabe des Produkts durch einen Ausgabeauslass (16) versehen ist, ein elektronisches Steuersystem (21), einen Sensor (23) zur Erfassung der Drehung des Mischers und eine Schnittstellenplatte (22) aufweist, die mit dem Steuersystem (21) verbunden sind, wobei die Schnittstellenplatte (22) Anzeigeeinrichtungen aufweist, wobei das Verfahren das Liefern von Information über die Drehung des Mischers, die vom Sensor (23) erfasst wird, an das elektronische Steuersystem (21), und wenn die Drehung des Mischers (13) mittels des Sensors (23) erfasst wird, die Anzeige eines bewegten Bilds (28) auf der Anzeigevorrichtung enthält, das die Drehung des Mischers darstellt.

## Revendications

1. Machine (10) destinée à produire et à distribuer des produits alimentaires, tels que de la crème glacée et similaire, comprenant un réservoir (11) refroidi par un circuit frigorifique (12) et un mélangeur hélicoïdal entraîné par un moteur électrique (13) qui tourne à l'intérieur du réservoir, le réservoir étant également doté à l'avant d'un robinet (15) destiné à distribuer le produit par l'intermédiaire d'une sortie de distribution (16), **caractérisé en ce qu'**elle comprend un système de commande (21), un détecteur (23) destiné à détecter la rotation du mélangeur et un panneau d'interface (22), qui sont connectés au système de commande (21), et **en ce que** le panneau d'interface (22) comprend des moyens d'affichage qui affichent une image animée (28) qui représente la rotation du mélangeur (13) détectée par le détecteur (23).

2. Machine selon la revendication 1, **caractérisée en ce que** l'image animée (28) se compose de flèches qui tournent de manière circulaire.

3. Machine selon la revendication 1, **caractérisée en ce que** les moyens d'affichage affichent, à l'intérieur de l'image animée (28), une seconde image (29) qui représente les états de fonctionnement de la machine.

4. Machine selon la revendication 3, **caractérisée en ce que** les états de fonctionnement affichés correspondent à l'un au moins d'un état de préparation du produit ou de l'état du produit prêt, chacun d'eux avec sa propre seconde image.

5. Machine selon la revendication 4, **caractérisée en ce que** l'état de préparation comprend à son tour un premier état de préparation initial et / ou un état de préparation intermédiaire et un état du produit presque prêt, chacun d'eux avec sa propre seconde image.

6. Machine selon la revendication 5, **caractérisée en ce que** l'état de préparation initial et / ou l'état de préparation intermédiaire et l'état du produit presque prêt, sont différenciés également au moyen de couleurs différentes de ladite seconde image dite.

7. Machine selon la revendication 1, **caractérisée en ce que** les moyens d'affichage dans le panneau d'interface (22) comprennent, ensemble ou alternativement, une zone (24) destinée à afficher des icônes d'état, une zone (25) destinée à afficher des informations alphanumériques, et une zone centrale (26) destinée à afficher ladite image animée.

8. Machine selon la revendication 1, **caractérisée en ce que** le panneau d'interface (22) comprend un écran tactile.

9. Machine selon la revendication 8, **caractérisée en ce que** le panneau d'interface (22) comprend en outre une zone destinée à afficher des commandes de fonctionnement de la machine, qu'il est possible de sélectionner à l'aide de l'écran tactile.

10. Procédé destiné à procurer à un utilisateur des informations qui se rapportent au fonctionnement interne d'une machine destinée à produire et à distribuer des produits alimentaires, tels que de la crème glacée et similaire, qui comprend un réservoir (11) refroidi par un circuit frigorifique (12) et un mélangeur hélicoïdal entraîné par un moteur électrique (13) qui tourne à l'intérieur du réservoir, le réservoir étant également doté à l'avant d'un robinet (15) destiné à distribuer le produit par l'intermédiaire d'une sortie de distribution (16), un système de commande (21), un détecteur (23) destiné à détecter la rotation du mélangeur et un panneau d'interface (22), qui sont connectés au système de commande (21), le panneau d'interface (22) comprenant des moyens d'affichage, le procédé comprenant les étapes consistant à :
fournir au système de commande électronique (21) des informations qui se rapportent à la rotation du mélangeur détectée par le détecteur (23) ; et
lorsque la rotation du mélangeur (13) est détectée à l'aide du détecteur (23), afficher sur les moyens d'affichage une image animée (28) qui représente ladite rotation du mélangeur.
